# EUROPEAN PATENT APPLICATION

(11) **EP 4 807 428 A1**
(43) Date of publication of application: **16.09.2026**
(21) Application number: 25797822.1
(22) Date of filing: 18.04.2025
(51) Int. Cl.: G02B 27/01, G02B 27/00, G02B 27/09

(54) **HEAD-MOUNTED DEVICE INCLUDING DISPLAY MODULE**

(30) Priority: 30.04.2024 KR 20240057468; 14.08.2024 KR 20240109239
(71) Applicant: Samsung Electronics Co., Ltd., Suwon-si, Gyeonggi-do 16677 (KR)
(72) Inventor: PARK, Jaeheung, Suwon-si Gyeonggi-do 16677 (KR)
(74) Representative: Gulde & Partner
(86) International application number: PCT/KR2025/005318
(87) International publication number: WO 2025/230197

(57) **Abstract**

A head mounted device according to various embodiments may include: a housing, a display disposed inside the housing, at least one lens including a front side and a rear side opposite the front side, the at least one lens being configured so that a user wearing the head mounted device is able to see the display through the at least one lens, a light emitting unit comprising light emitting circuitry disposed to the front side of the at least one lens and configured to emit light in a first direction, a camera disposed to the front side of the at least one lens and configured to obtain an image of at least part of an eyeball of the user, and a refractive element comprising a refractive material disposed between the at least one lens and the light emitting unit. The light emitted from the light emitting unit may be refracted by the refractive element in a second direction facing the eyeball of the user.

## Description

### [Technical Field]

The disclosure relates to a head mounted device including a display module.

### [Background Art]

Recently, the widespread use of wearable electronic devices that can be directly worn on a body has been actively underway. The wearable electronic devices may be used by being mounted on a portion of the body, for example, a wrist, an ankle, a neck, a waist, a head, or the like, thereby improving mobility and portability. As an example of the wearable electronic device, a head-mounted display apparatus (hereinafter, referred to as an HMD) mounted on a user's head to display an image may have a wearing portion so as to be mounted on the head. The HMD may include an AR device which implements Augmented Reality (AR) and a VR device which implements Virtual Reality (VR).

The aforementioned information may be provided as the related art to aid understanding of the disclosure. No claim or determination is made as to whether any of the aforementioned content is applicable as prior art related to the disclosure.

### [Disclosure of Invention]

### [Solution to Problem]

A head mounted device according to an embodiment of the disclosure may include a housing. The head mounted device may include a display disposed in a space formed by the housing. The head mounted device may include at least one lens disposed so that light emitted from the display is transmitted to output to the outside of the head mounted device. The head mounted device may include a light emitting unit comprising light emitting circuitry disposed in the space and emitting first light including light of a specified wavelength band in a first direction. The head mounted device may include a camera disposed in the space and obtaining an image, based on second light including light of the specified wavelength band. The head mounted device may include a refractive element comprising a refractive material disposed between the at least one lens and the light emitting unit and refracting the first light emitted from the light emitting unit in a second direction different from the first direction.

A display module of a head mounted device according to an embodiment of the disclosure may include a display, at least one lens disposed so that light emitted from the display is transmitted, a light emitting unit emitting first light including light of a specified wavelength band in parallel to an optical axis of the at least one lens, a camera obtaining an image, based on second light including light of the specified wavelength band, and a refractive element disposed between the at least one lens and the light emitting unit and refracting the first light emitted from the light emitting unit toward the optical axis.

### [Brief Description of Drawings]

The above and other aspects, features and advantages of certain embodiments of the present disclosure will be more apparent from the following detailed description, taken in conjunction with the accompanying drawings, in which:
FIG. 1 is a block diagram illustrating electronic device in a network environment, according to various embodiments;
FIG. 2 is a perspective view illustrating a state where a user wears a head mounted device according to an embodiment;
FIG. 3 is a rear perspective view of a head mounted device according to an embodiment;
FIG. 4 is a front perspective view illustrating a head mounted device according to an embodiment;
FIG. 5 is a diagram conceptually illustrating an optical path through which light emitted from a light emitting unit travels according to an embodiment;
FIG. 6 is a perspective view illustrating display module of a head mounted device according to an embodiment;
FIG. 7 is an exploded perspective view of display module of a head mounted device according an embodiment;
FIG. 8 is an exploded perspective view of display module of a head mounted device according to an embodiment;
FIG. 9 is an exploded perspective view of display module of a head mounted device according to an embodiment;
FIG. 10 is an enlarged exploded perspective view illustrating part of a structure of a display module according to an embodiment;
FIG. 11 is a cross-sectional view of a display module including a light emitting unit according to an embodiment;
FIG. 12 is a cross-sectional view illustrating a display module including a refractive element according to an embodiment;
FIG. 13A is a diagram illustrating a light emitting region of light emitted from a light emitting unit according to an embodiment;
FIG. 13B is a diagram illustrating a light emitting region in which light emitted from a light emitting unit is refracted by a refractive element according to an embodiment;
FIG. 14 is a partial perspective view illustrating part of a region including the light emitting unit of FIG. 12 according to an embodiment;
FIG. 15 is a cross-sectional view illustrating a display module including an auxiliary lens according to an embodiment;
FIG. 16 is an enlarged partial cross-sectional view illustrating part of a region including the auxiliary lens of FIG. 15 according to an embodiment;
FIG. 17 is an exploded perspective view illustrating an example in which an auxiliary lens, a refractive element, and a cover are formed integrally according to an embodiment;
FIG. 18 is a perspective view illustrating an example in which an auxiliary lens and a cover are formed separately according to an embodiment; and
FIG. 19 is a cross-sectional view illustrating an example of a lens according to an embodiment.

With regard to the description of the drawings, the same or similar reference numerals may be used to refer to the same or similar elements.

### [Mode for the Invention]

Hereinafter, various embodiments of the disclosure are described with reference to the accompanying drawings. However, it should be appreciated that the description is not intended to limit the technological features set forth herein to particular embodiments and includes various modifications, equivalents, and/or alternatives of the disclosure.

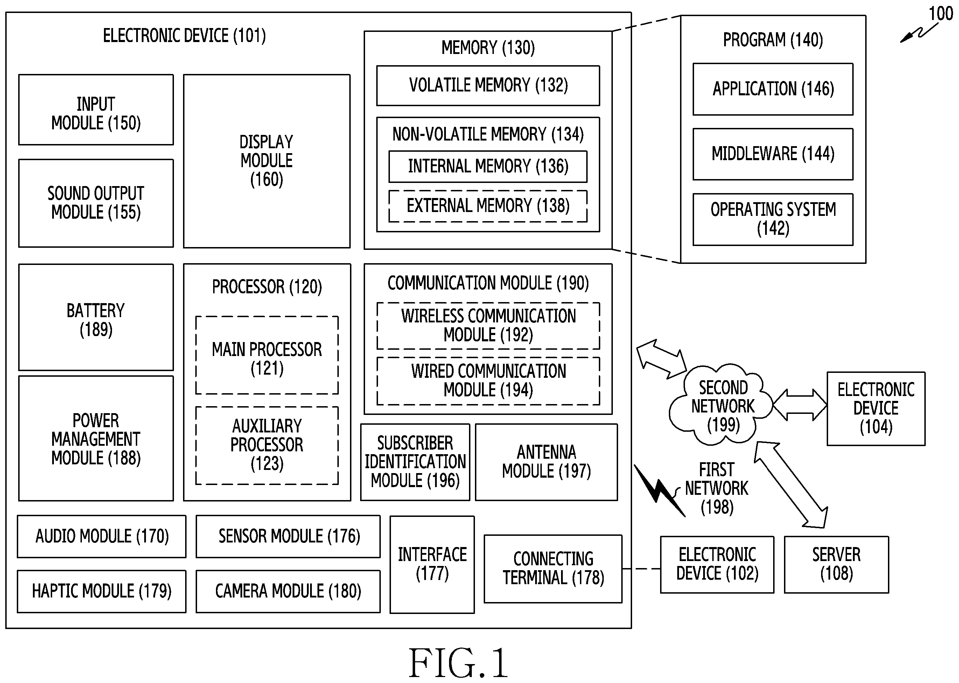

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term"non-transitory" simply means that thestorage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

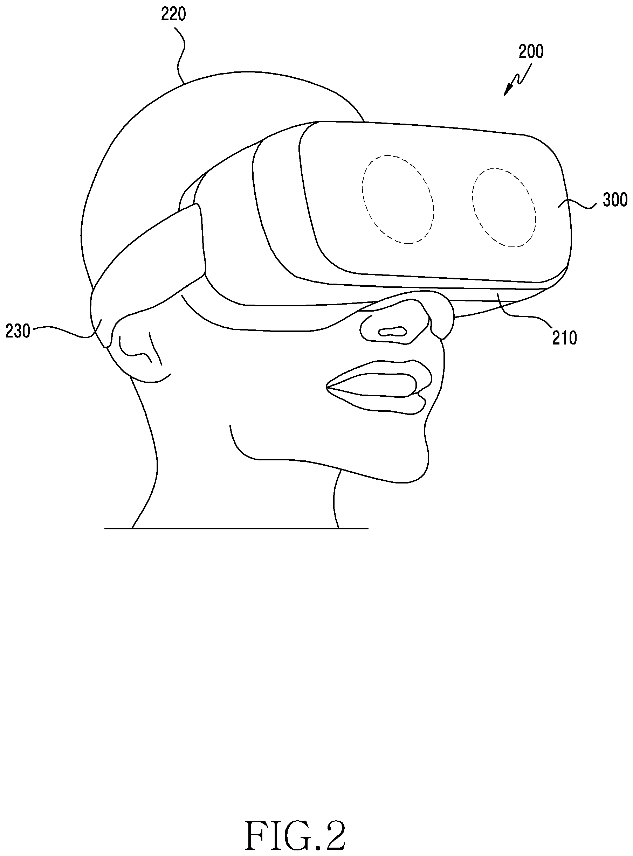

FIG. 2 is a perspective view illustrating a state where a user wears a head mounted device according to an embodiment. For example, the head mounted device of FIG. 2 may correspond to the electronic device 101 of FIG. 1.

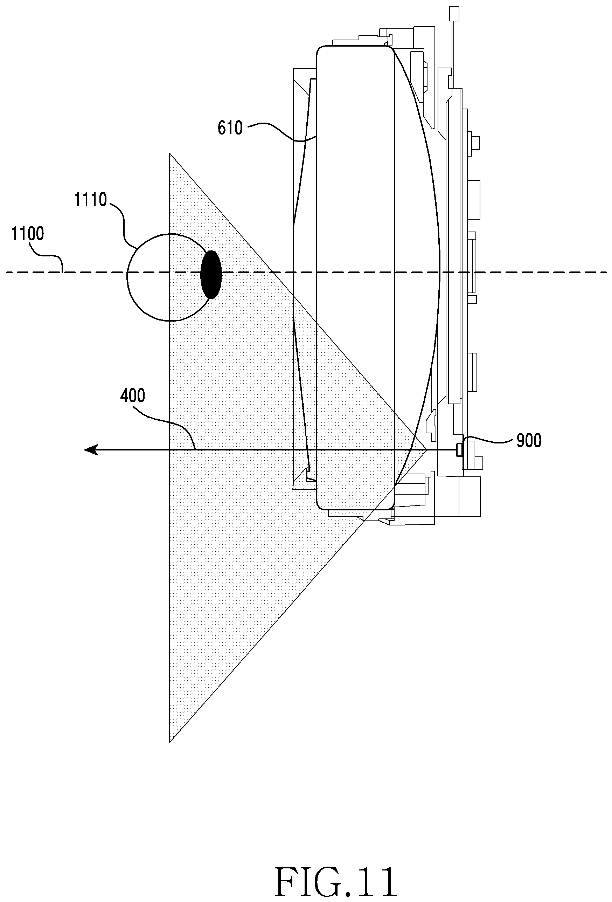

According to an embodiment of the disclosure, a head mounted device 200 of FIG. 2 may be mounted on a user's head 220 through a strap 230. For example, a length of the strap 230 may be adjusted to be wearable on the user's head 220. The head mounted device 200 may include at least one display module (e.g., including a display) 300. For example, the display module 300 may correspond to the display module 160 of FIG. 1. In a state where the head mounted device 200 is mounted on the user's head 220, the at least one display module 300 may be located in front of a user's eyeball (e.g., the eyeball 1110 of FIG. 11). For example, the at least one display module 300 may be disposed at a location corresponding to a location of the user's eyeball.

According to an embodiment of the disclosure, the at least one display module 300 included in the head mounted device 200 may be protected by a cover 210 of the head mounted device. For example, the at least one display module 300 may be disposed between the head mounted device 200 and the cover 210. For example, the at least one display module 300 may be disposed to a space formed inside the head mounted device 200. For example, the cover 210 may be disposed to cover at least part of the at least one display module 300.

According to an embodiment of the disclosure, the head mounted device 200 may use at least one sensor to detect whether the head mounted device 200 is mounted on the user's head 220. Based on detecting that the head mounted device 200 is mounted on the user's head 220, the head mounted device 200 may provide the user with augmented reality and/or virtual reality. For example, the head mounted device 200 may additionally display a digital object in a physical world outside the head mounted device 200 through the at least one display module 300 and provide it to the user. For example, the head mounted device 200 may provide the user with a virtual environment or situation to make the user feel as if the user interacts with a real situation and/or a real object through the at least one display module 300.

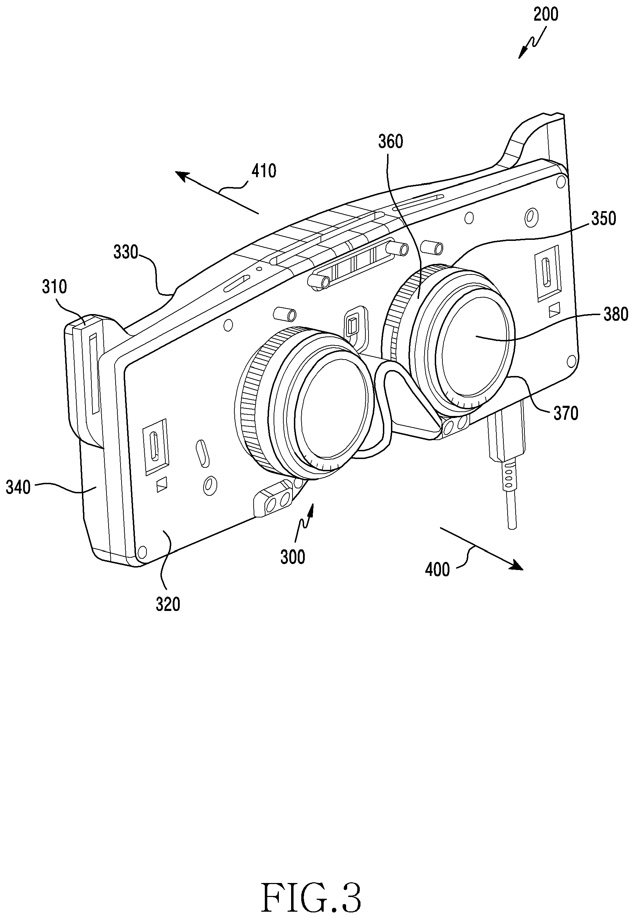

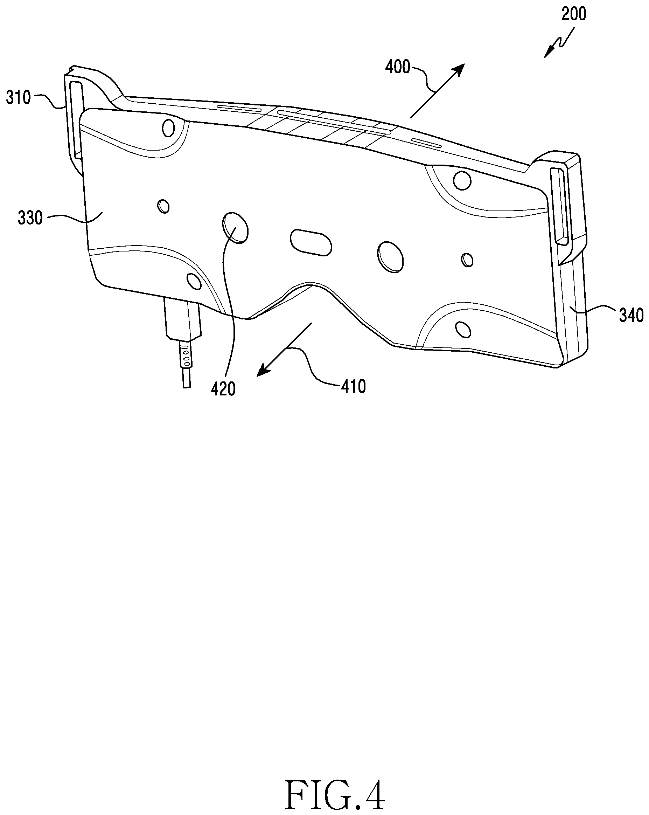

FIG. 3 is a rear perspective view illustrating a head mounted device according to an embodiment. FIG. 4 is a front perspective view illustrating the head mounted device according to an embodiment.

According to an embodiment of the disclosure, the head mounted device 200 may include a frame 310 and at least one display module 300. The frame 310 may include a first face 320 facing a first direction 400, a second face 330 facing a second direction 410 opposite the first direction 400, and a side face 340 formed to surround at least part of an inner space formed by the first face 320 and the second face 330. For example, at least one of the first direction 400 and/or the second direction 410 may be a direction parallel to an optical axis of at least one lens 380. For example, the first direction 400 may be a direction facing a user's eyeball. For example, the second direction 410 may be a direction facing the outside of the head mounted device 200. For example, the first face 320 may correspond to a rear face of the head mounted device 200. For example, the second face 330 may correspond to a front face of the head mounted device 200.

According to an embodiment of the disclosure, the frame 310 may include at least one opening 350. For example, the at least one opening 350 may be formed on the frame 310 to correspond to a shape of the at least one display module 300. For example, the at least one opening 350 may be formed on the first face 320 of the frame 310.

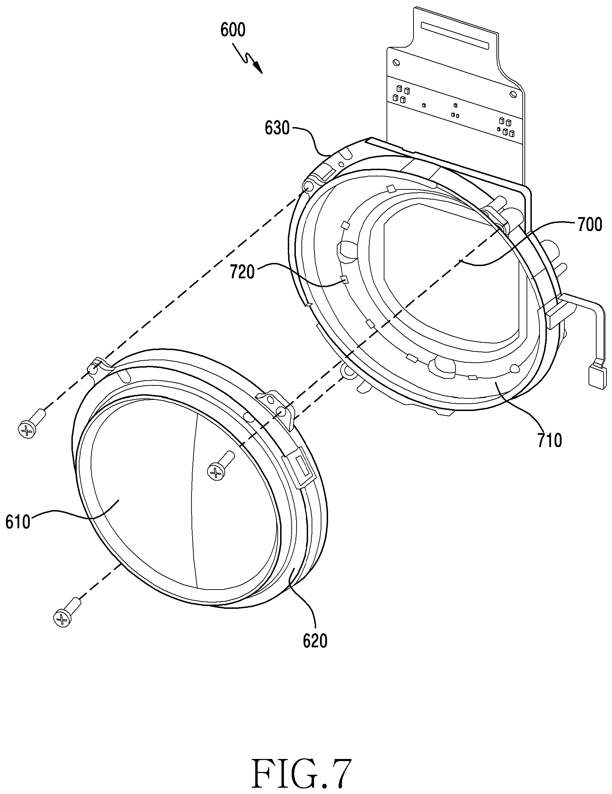

According to an embodiment of the disclosure, the at least one display module 300 may include a housing 360, a display (e.g., a display 700 of FIG. 7), and at least one lens 380. The housing 360 may include the display and/or the at least one lens 380. The display may be disposed to one side of the housing 360. For example, an accommodating portion capable of accommodating the display may be included in one side facing the second direction 410 of the housing 360. The at least one lens 380 may be disposed to the other side facing the first direction 400 of the housing 360. A user may see the display through the at least one lens 380. In order to avoid or provide protection from external impact, the at least one lens 380 may be joined with a lens accommodating portion 370 which protects the at least one lens 380. For example, the at least one lens 380 joined with the lens accommodating portion 370 may be disposed to the other side of the housing 360.

According to an embodiment of the disclosure, at least one sensor may be provided on a rear face (e.g., the first face 320) of the head mounted device 200. For example, the head mounted device 200 may detect whether the head mounted device 200 is mounted on the user's head 220 through the at least one sensor. For example, the head mounted device 200 may trace a user's face through the at least one sensor. For example, the head mounted device 200 may trace a user's eyeball through the at least one sensor. For example, the head mounted device 200 may recognize a user's iris through the at least one sensor. In addition to the described example, various sensors for achieving the purpose of the head mounted device 200 may be provided on the first face 320 of the head mounted device 200.

According to an embodiment of the disclosure, a first camera 420 may be provided on the second face 330 of the head mounted device 200. For example, the head mounted device 200 may obtain an image for an external object of the head mounted device 200 through the first camera 420. The head mounted device 200 may provide virtual reality and/or augmented reality through the display, based on the image obtained through the first camera 420.

According to an embodiment of the disclosure, the at least one sensor may be provided on the front face of the head mounted device 200. For example, the head mounted device 200 may use the at least one sensor to measure a distance between the head mounted device 200 and the external object. Based on the measured distance, the head mounted device 200 may provide a user with a sense of depth in augmented reality or virtual reality displayed through the display. In addition to the described example, various sensors for achieving the purpose of the head mounted device 200 may be provided on the second face 330 of the head mounted device 200.

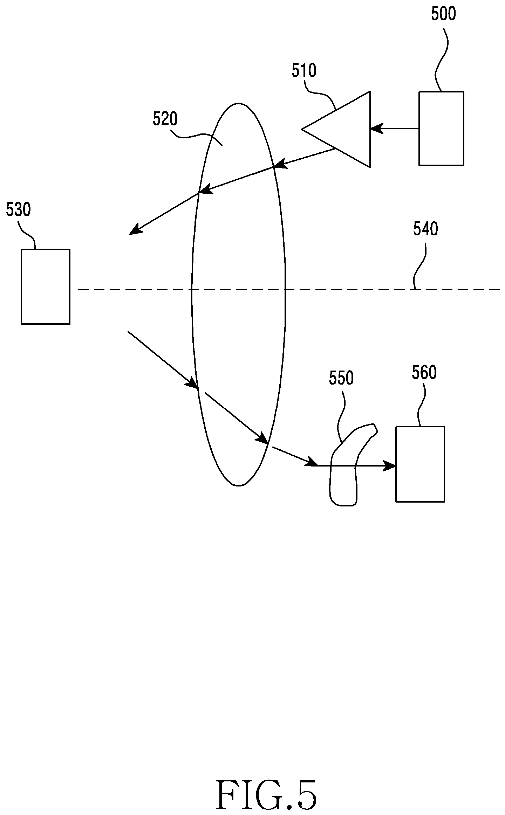

FIG. 5 is a diagram conceptually illustrating an optical path through which light emitted from a light emitting unit travels according to an embodiment.

According to an embodiment of the disclosure, the display module 300 may include a light emitting unit (e.g., including light emitting circuitry) 500, a refractive element 510, a first lens 520, a second lens 550, and a second camera 560. The optical path may be formed by the light emitting unit 500, the refractive element 510, the first lens 520, the second lens 550, and the second camera 560. For example, a first optical path may be formed by the light emitting unit 500, the refractive element 510, the first lens 520, and an object 530. For example, a second optical path may be formed by the object 530, the first lens 520, the second lens 550, and the second camera 560. For example, the first lens 520 may correspond to the at least one lens 380 of FIG. 3.

According to an embodiment of the disclosure, first light may be emitted from the light emitting unit 500. The first light may be emitted from the light emitting unit 500 to face a first direction (e.g., the first direction 400 of FIG. 3 and FIG. 4). For example, the first direction 400 may be a direction parallel to an optical axis of the first lens 520. The first light emitted from the light emitting unit 500 may be refracted by the refractive element 510. The first light may be refracted by the refractive element 510 to face a third direction different from the first direction 400. For example, the third direction may be a direction facing an optical axis 540 of the first lens 520. For example, the third direction may be a direction facing the object 530.

According to an embodiment, the object 530 may correspond to, for example, part of a region of a user's face. For example, the object 530 may correspond to a user's eyeball. For example, the object 530 may correspond to a user's iris.

According to an embodiment of the disclosure, the refractive element 510 may be disposed so that light refracted in the third direction is output through the first lens 520. For example, the refractive element 510 may be disposed to one side of the light emitting unit 500 so that light emitted from the light emitting unit 500 is refracted in the third direction. For example, the refractive element 510 may be disposed between the light emitting unit 500 and the first lens 520. For example, the refractive element 510 may be disposed to one side of the first lens 520 so that light refracted in the third direction by the refractive element 510 faces the object 530 through the first lens 520.

According to an embodiment of the disclosure, locations of the light emitting unit 500 and/or the refractive element 510 are not limited thereto, and the light emitting unit 500 and/or the refractive element 510 may be disposed between the object 530 and the first lens 520. Accordingly, the light emitted from the light emitting unit 500 may reach the object 530 through the refractive element 510, without passing through the first lens 520. An amount of light reaching the object 530 may be increased by the refractive element 510.

According to an embodiment of the disclosure, the first light refracted in the third direction by the refractive element 510 may reach the object 530 by passing through the first lens 520. The first light reaching the object 530 may be reflected from the object 530. Second light reflected from the object 530 may pass through the first lens 520 toward a fourth direction. For example, the fourth direction may be a direction away from the optical axis 540. The second light passing through the first lens 520 may be collected by the second lens 550.

According to an embodiment of the disclosure, the second lens 550 may collect the second light passing through the first lens 520 so as to be focused on the second camera 560. For example, the second lens 550 may allow the second light to be collected on the second camera 560 so that an image of an object is not distorted by the first lens 520. For example, an image sensor unit of the second camera 560 may obtain the image of the object not distorted by the second lens 550. The second camera 560 may obtain an image of the object 530 through the second light reflected from the object 530. The head mounted device 200 may identify the object 530, based on the image obtained by the second camera 560.

According to an embodiment of the disclosure, the second camera 560 may include a bandpass filter (not shown) so that light of a specified frequency band (or a specified wavelength band) is incident to the second camera 560 (e.g., a lens of the second camera 560). In an embodiment, the light emitting unit 500 may output infrared light of about 850 nanometer (nm), and the bandpass filter of the second camera 560 may pass a wavelength of about 830 to 870nm.

According to an embodiment of the disclosure, regarding the first light emitted from the light emitting unit 500, an amount of light reaching the object 530 may be increased by the refractive element 510. The second light reflected from the object 530 and passing through the first lens 520 may be corrected by the second lens 550 and received by the second camera 560. For example, in the process in which the second light is reflected by the object 530 and passes through the first lens 520, the distorted second light may be corrected by the second lens 550 and received by the second camera 560. For example, based on the second light corrected by the second lens 550, the second camera 560 may obtain an image with an improved resolution.

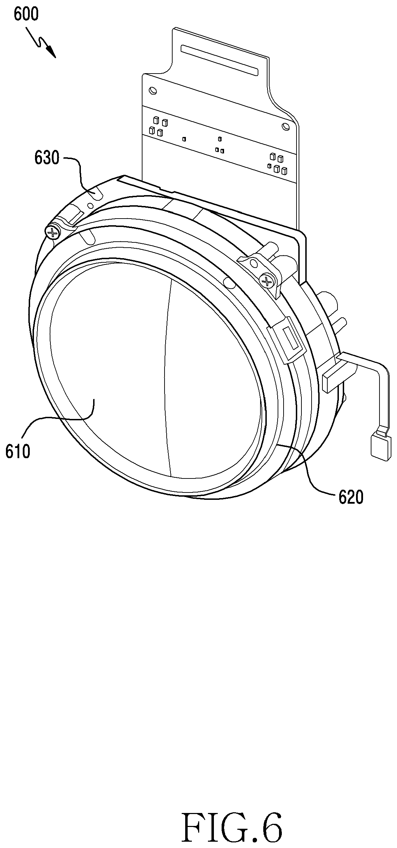

FIGS. 6, 7, 8 and 9 are various perspective views including exploded perspective views illustrating display modules of a head mounted device according to various embodiments.

According to an embodiment of the disclosure, a display module 600 may include a lens 610, a lens accommodating portion 620, a housing 630, a display 700, a cover 710, a refractive element 720, a light emitting unit 900, and a printed circuit board 800. For example, the display module 600 may correspond to the display module 300 of FIG. 2. For example, the lens 610 may correspond to the at least one lens 380 of FIG. 3 and/or the first lens 520 of FIG. 5. For example, the lens accommodating portion 620 may correspond to the lens accommodating portion 370 of FIG. 3. For example, the housing 630 may correspond to the housing 360 of FIG. 3. For example, the refractive element 720 may correspond to the refractive element 510 of FIG. 5. For example, the light emitting unit 900 may correspond to the light emitting unit 500 of FIG. 5.

According to an embodiment of the disclosure, the housing 630 may include a display accommodating portion 910 capable of disposing the display 700. The display accommodating portion 910 may be formed on one side of the housing 630. The printed circuit board 800 may be disposed along an edge of the display accommodating portion 910. The printed circuit board 800 may be electrically coupled to a processor (e.g., the processor 120 of FIG. 1) of the head mounted device 200. The processor 120 may control the light emitting unit 900 provided on the printed circuit board 800 to emit light. The light emitting unit 900 may include a plurality of light emitting elements. The plurality of light emitting elements may be disposed on the printed circuit board 800 according to a specific interval. For example, the light emitting elements may be disposed with equal intervals, or may be disposed with different intervals within a range for achieving the purpose of light emitting.

According to an embodiment of the disclosure, the plurality of light emitting elements of the light emitting unit 900 may be disposed radially on the printed circuit board 800. For example, the plurality of light emitting elements may be disposed radially according to a shape of the printed circuit board 800 disposed along an edge of the display accommodating portion 910.

According to an embodiment of the disclosure, the display module 600 may include a third lens. For example, the third lens may include a lens for correcting an eyesight of a user wearing the head mounted device 200. The third lens may be disposed between the lens 600 and the object 530. For example, when the object 530 is a user's eyeball, the third lens may be disposed between the lens 600 and the user's eyeball. For example, light emitted from the display 700 may reach the user's eyeball by passing through the third lens. For example, the light emitted from the display 700 may be refracted by the third lens so as to be focused on a retina of the user's eyeball. For example, regarding the third lens, a shape of the lens or a refractive index of the lens may be adjusted for each eyeball of the user so that the light is focused on the retina of the user's eyeball.

According to an embodiment of the disclosure, when the light emitting unit 900 is disposed to a front side of the lens 600, the third lens may be formed to be greater in size than the lens 600, and may be disposed between the lens 600 and the user's eyeball. For example, when the light emitting unit 900 is disposed radially along an edge of the lens 600, the third lens may be formed to have a size covering the light emitting unit 900. For example, when the light emitting unit 900 is viewed by the user's eyeball, the third lens may be formed to overlap with the lens 600 and the light emitting unit 900 disposed radially along the edge of the lens 600. For example, when the light emitting unit 900 is viewed by the user's eyeball, the light emitting unit 900 may be covered by the third lens. For example, since the third lens is formed to have a size enough to cover the light emitting portion 900, light emitted from the light emitting unit 900 may not be interfered by the third lens.

According to an embodiment of the disclosure, the light emitting unit 900 may emit light of a specified wavelength band. The light of the specified wavelength band, emitted from the light emitting unit 900, may include light of an infrared wavelength band so as not to produce interference to an object (e.g., the user's eyeball 1110) and/or the display. The light of the infrared wavelength band may be focused on an object (e.g., the object 530 of FIG. 5). The head mounted device 200 may identify the object (e.g., the object 530), based on an image obtained by a camera (e.g., the second camera 560) through the light of the infrared wavelength band, reflected from the object (e.g., the object 530).

According to an embodiment of the disclosure, the cover 710 may be disposed to cover at least part of the printed circuit board 800. The cover 710 may include a material which blocks light. For example, the cover 710 may be coated with the material which blocks the light. For example, the cover 710 may include a black material which absorbs the light. Since the cover 710 includes the material which blocks the light, light reflected from the printed circuit board 800 may be prevented or blocked from reaching an object (e.g., the user's eyeball 1110). For example, since the light reflected from the printed circuit board 800 is blocked by the cover 710, the printed circuit board 800 may not be visually visible to the user in a process in which the user uses the display.

In an embodiment of the disclosure, the cover 710 may include the refractive element 720. The refractive element 720 may be formed integrally with the cover 710, or may be formed as a separate member. The refractive element 720 may include a material which passes only light of a specified wavelength band, emitted from the light emitting unit 900. For example, at least part of the refractive element 720 may be coated with the material which passes only the light of the specified wavelength band, emitted from the light emitting unit 900. For example, a filter which passes only the light of the specified wavelength band, emitted from the light emitting unit 900, may be disposed to at least part of the refractive element. For example, the specified wavelength band may include the infrared wavelength band. For example, the refractive element 720 may include a black material which absorbs light of a visible light wavelength band and passes light of the infrared wavelength band. For example, although the refractive element 720 may include a material with a color other than black, since the material absorbs the light of the visible light wavelength band and passes the light of the infrared wavelength band, it may be viewed to be black.

According to an embodiment of the disclosure, the cover 710 may include the refractive element 720 capable of refracting light of a specified wavelength band, emitted from the light emitting unit 900. The refractive element 720, as a separate member, may be disposed on the cover 710. For example, the refractive element 720 may be formed in a shape capable of refracting the light emitted from the light emitting unit 900 at a specified angle. For example, the refractive element 720 may include a member of a prism shape. The prism shape may be formed variously such that the light emitted from the light emitting unit 900 is refracted at a specified angle, based on a relative locational relationship between the lens 610 and an object (e.g., a user's eyeball 1110).

According to an embodiment of the disclosure, the refractive element 720 may be formed integrally with the cover 710. For example, the refractive element 720 may be formed in a region in which the light emitted from the light emitting unit 900 passes among regions of the cover 710. For example, a shape which allows the light emitted from the light emitting unit 900 to be refracted may be formed in some of the regions of the cover 710. The some of the regions may be formed to have a prism shape so that the light emitted from the light emitting unit 900 is refracted.

According to an embodiment of the disclosure, the cover 710 may be formed radially to cover a plurality of light emitting elements. For example, the cover 710 may be formed in a radial closed-curve shape to cover the plurality of light emitting elements. However, the disclosure is not limited thereto, and the cover 710 may not be formed in the closed-curve shape.

According to an embodiment, the refractive element 720 may be configured such that light emitted from the plurality of light emitting elements of the light emitting unit 900 disposed radially is refracted. For example, the refractive element 720 may be configured such that the emitted light is refracted to the inside of the radial shape.

According to an embodiment of the disclosure, the refractive element 720 may be configured such that the light emitted from the light emitting unit 900 is refracted toward a user's eye, based on Eye Relief (ER). For example, the refractive element 720 may be configured such that the light emitted from the light emitting unit 900 is refracted toward an optical axis, based on the ER. For example, the ER may refer to a distance between the user's eye and the lens 610.

According to an embodiment of the disclosure, the display 700, the cover 710, and the printed circuit board 800 may be disposed inside an inner space formed by the lens 610, the lens accommodating portion 620, and the housing 630. The user may see the display 700 through the lens 610. Light emitted from the light emitting unit 900 formed on the printed circuit board 800 may be formed on an object (e.g., the user's eyeball 1110) by passing through the lens 610. Light reflected from an object may be corrected by a second lens (e.g., the second lens 550 of FIG. 5) by passing through the lens 610, and may be transferred to a second camera (e.g., the second camera 560 of FIG. 5). For example, a distortion produced in a process in which the light reflected from the object passes through the lens 610 may be corrected by the second lens (e.g., the second lens 550 of FIG. 5) formed on the cover 710, and may be transferred to the second camera (e.g., the second camera 560 of FIG. 5).

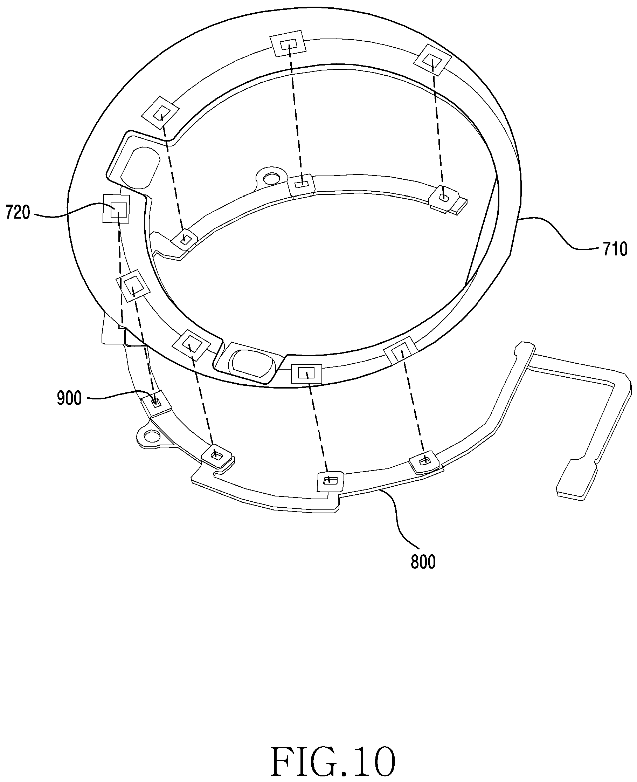

FIG. 10 is an enlarged partial perspective view illustrating part of a structure of a display module according to an embodiment. FIG. 10 illustrates an example of a locational relationship between the light emitting unit 900 and the refractive element 720.

According to an embodiment of the disclosure, the light emitting unit 900 may be disposed on the printed circuit board 800. For example, the light emitting unit 900 may include a plurality light emitting elements. For example, the plurality of light emitting elements may be disposed along an edge of the display accommodating portion 910 in which the display 700 is accommodated. For example, the plurality of light emitting elements may be disposed with a specific interval along the edge of the display accommodating portion 910.

According to an embodiment of the disclosure, the cover 710 may be disposed to cover the printed circuit board 800. The refractive element 720 may be provided on the cover 710. The refractive element 720 may be disposed on the cover 710 to correspond to locations of the plurality of light emitting elements. Since the refractive element 720 is disposed at a location corresponding to the locations of the plurality of light emitting elements (e.g., the plurality of light emitting elements of the light emitting unit 900), light emitted from the plurality of light emitting elements may be refracted.

FIG. 11 is a cross-sectional view of a display module including a light emitting unit according to an embodiment.

According to an embodiment of the disclosure, for example, an optical axis 1100 may correspond to the optical axis 540 of FIG. 5. For example, an eyeball 1110 may correspond to the object 530 of FIG. 5. FIG. 11 conceptually illustrates a path of light emitted from a light emitting unit (e.g., the light emitting unit 900 of FIG. 10) of a display not including a refractive element (e.g., the refractive element 720 of FIG. 10).

According to an embodiment of the disclosure, when the refractive element 720 is not disposed to one side of the light emitting unit 900, an amount of light emitted from the light emitting unit 900 toward the first direction 400 and passing through the lens 610 may be more decreased than a case where the refractive element 720 is disposed to one side of the light emitting unit 900. For example, since the amount of light passing through the lens 610 is decreased, an amount of light reaching the eyeball 1110 may be reduced. For example, when the refractive element 720 is not disposed to one side of the light emitting unit 900, the amount of light reaching the eyeball 1110 may be reduced. Since the amount of light reaching the eyeball 1110 is reduced, an amount of light transferring to the second camera 560 by passing through the lens 610 may be reduced. The reduction of the amount of light transferred to the second camera 560 may result in a reduction of a resolution of an image of the eyeball 1110, obtained by the second camera 560.

According to an embodiment of the disclosure, the light emitting unit 900 and/or the second camera 560 may not be limited to these locations, and may be disposed between the lens 610 and the eyeball 1110. Accordingly, light emitted from the light emitting unit 900 may reach at least part of a user's face region including the eyeball 1110, without passing through the lens 610. Light reflected from the at least part of the user's face region including the eyeball 1110 may reach the second camera 560 without passing through the lens 610.

According to an embodiment of the disclosure, when the refractive element 720 is not disposed to one side of the light emitting unit 900, the amount of light reaching the eyeball 1110 may be reduced. Since the amount of light reaching the eyeball 1110 is reduced, the resolution of the image of the eyeball 1110, obtained by the second camera 560, may be reduced.

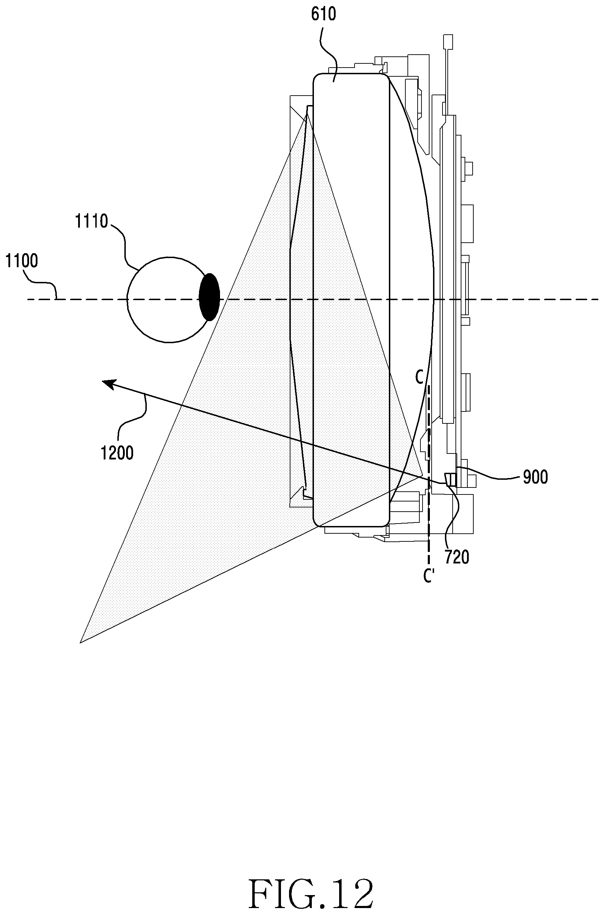

FIG. 12 is a cross-sectional view of a display module including a refractive element according to an embodiment. FIG. 12 conceptually illustrates a path of light emitted from the light emitting unit 900 of the display module 600 including the refractive element 720.

According to an embodiment of the disclosure, when the refractive element 720 is disposed to one side of the light emitting unit 900, since light 1200 is refracted toward the optical axis 1110 by the refractive element 720, an amount of light emitted from the light emitting unit 900 toward the first direction 400 and passing through the lens 610 may be more increased than a case where the refractive element 720 is not disposed to one side of the light emitting unit 900. Since the amount of light passing through the lens 610 is increased, an amount of light reaching the eyeball 1110 may be increased. Since the amount of light reaching the eyeball 1110 is increased, an amount of light transferred to the second camera 560 by passing through the lens 610 may be increased. The increase in the amount of light transferred to the second camera 560 may result in an increase in a resolution of an image of the eyeball 1110, obtained by the second camera 560.

According to an embodiment of the disclosure, the light emitting unit 900, the second camera 560, and/or the refractive element 720 may not be limited to these locations, and may be disposed between the lens 610 and the eyeball 1110. Accordingly, light emitted from the light emitting unit 900 may reach at least part of a user's face region including the eyeball 1110 by passing through the refractive element 720, without passing through the lens 610. The amount of light reaching the eyeball 1110 may be increased by the refractive element 720. Since the amount of light reaching the eyeball 1110 is increased, the resolution of the image of the eyeball 1110, obtained by the second camera 560, may be increased.

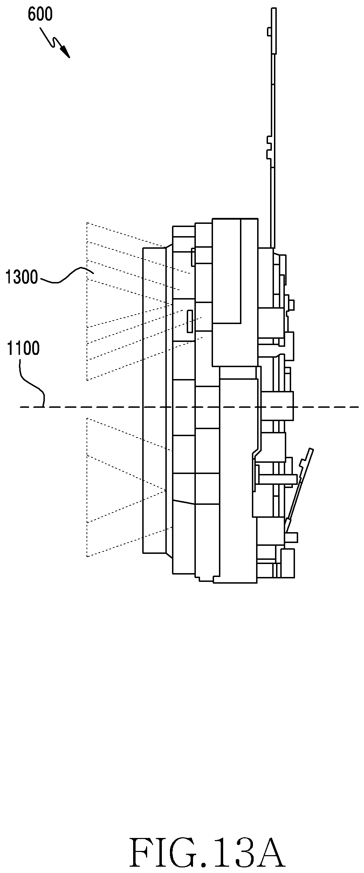

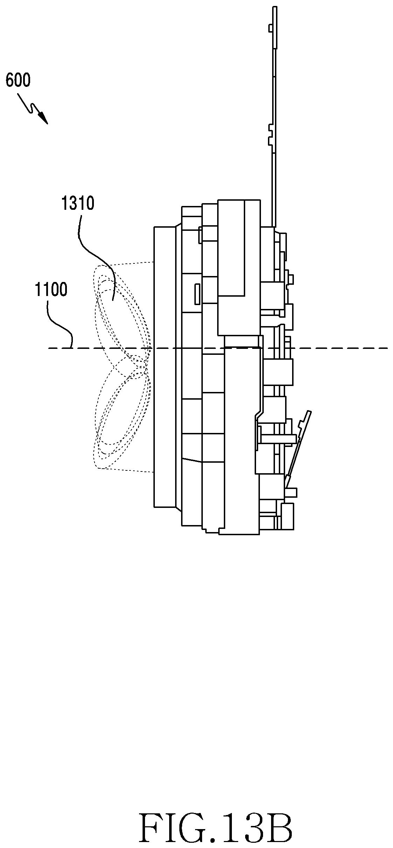

FIG. 13A is a diagram illustrating light-emitting regions of light emitted from a light emitting unit according to an embodiment. FIG. 13B is a diagram illustrating light emitting regions in which light emitted from a light emitting unit is refracted by a refractive element according to an embodiment.

According to an embodiment of the disclosure, one or more first light emitting regions 1300 of FIG. 13A may be regions of light emitted from the light emitting unit 900. Referring to FIG. 13A, the one or more first light emitting regions 1300 of the light emitted from the light emitting unit 900 may be formed along an edge of the printed circuit board 800 on which the light emitting unit 900 is disposed about the optical axis 1100. Compared to one or more second light emitting regions 1310 of FIG. 13B, the one or more first light emitting regions 1300 may be formed relatively parallel to the optical axis 1100.

According to an embodiment of the disclosure, referring to FIG. 13B, the one or more second light emitting regions 1310 may be light emitting regions in which light emitted from the light emitting unit 900 is refracted by the refractive element 720. Referring to FIG. 13B, the second light emitting regions 1310 of the light emitted by the refractive element 720 may be formed along the edge of the printed circuit board 800 on which the light emitting unit 900 is disposed about the optical axis 1100, and may be formed relatively toward the optical axis 1110, compared to the one or more first light emitting regions 1300. The one or more second light emitting regions 1310 may be formed to overlap at least in part.

According to an embodiment of the disclosure, an overlapping region in which the one or more second light emitting regions 1310 overlap may be greater than an overlapping region in which the one or more first light emitting regions 1300 overlap. Accordingly, an amount of light in the overlapping region in which the one or more second light emitting regions 1310 overlap may be greater than an amount of light in the overlapping region in which the one or more light emitting regions 1300 overlap.

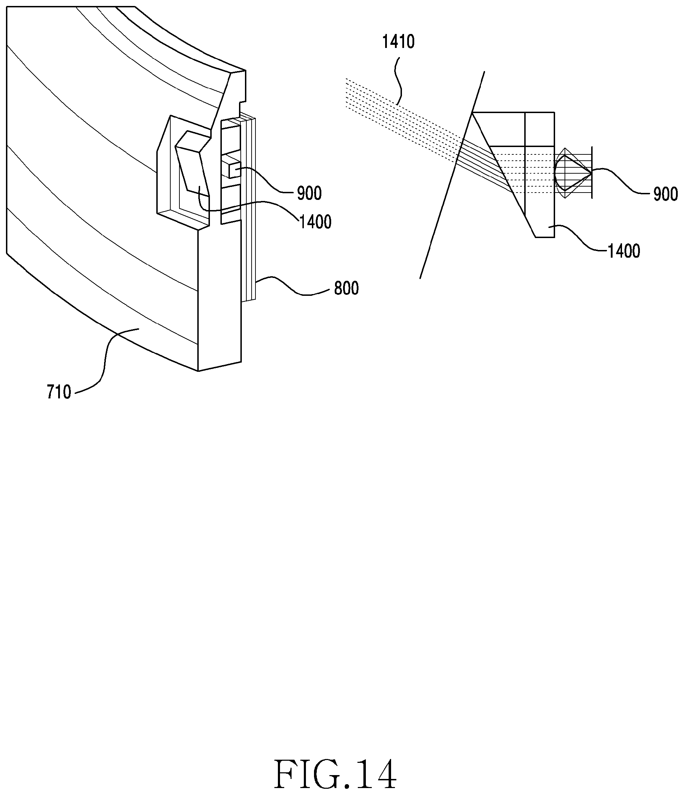

FIG. 14 is a partial perspective enlarged view illustrating part of a region including the light emitting unit of FIG. 12 according to an embodiment. A refractive element (e.g., the refractive element 720 of FIG. 10) may include part of a region formed to have a prism shape 1400 among regions of the cover 710. Light 1410 emitted from the light emitting unit 900 in a direction substantially parallel to the optical axis 1100 may be refracted by the prism shape 1400 toward the optical axis 1100. The prism shape 1400 may be formed at a location corresponding to a location of the light emitting unit 900, so that the light 1410 emitted from the light emitting unit 900 passes the prism shape 1400. The prism shape 1400 may be disposed so that the light 1410 emitted in the range of a specific angle (e.g., about 120 degrees) passes the prism shape 1400. The cover 710 may be disposed on the printed circuit baord 800 so that the prism shape 1400 formed on the cover 710 overlaps at least in part with the light emitting unit 900. The prism shape 1400 of FIG. 14 is only an example, and the refractive element 720 may be formed in various shapes, in the range for refracting the light 1410 emitted from the light emitting unit 900 toward the optical axis 1100.

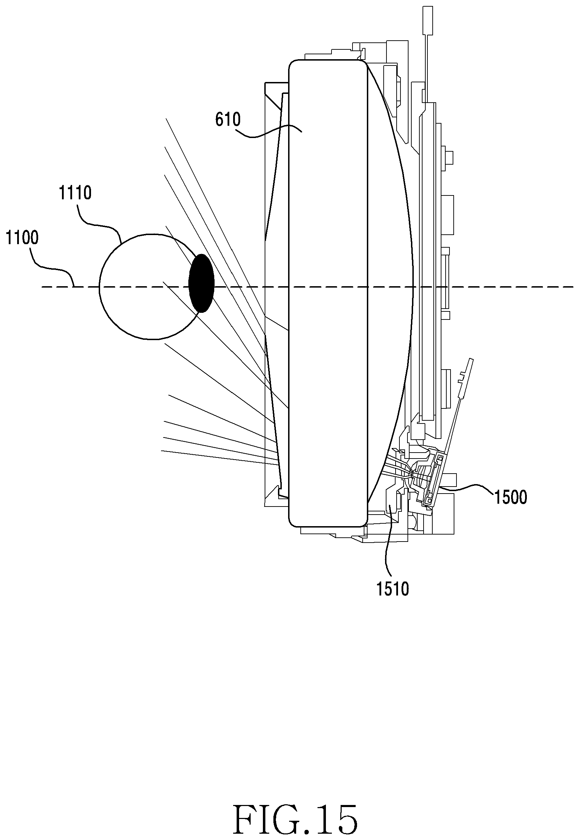

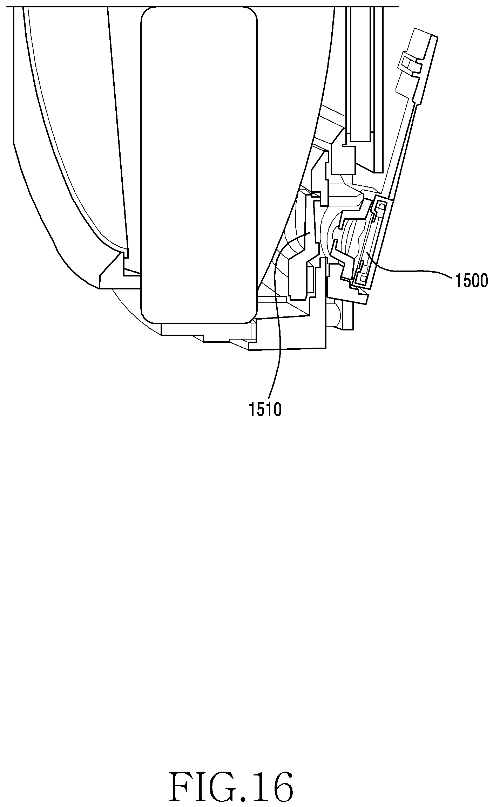

FIG. 15 is a cross-sectional view illustrating a display module including an auxiliary lens according to an embodiment. FIG. 16 is an enlarged partial cross-sectional view illustrating part of a region including the auxiliary lens of FIG. 15 according to an embodiment.

According to an embodiment of the disclosure, light emitted from the light emitting unit 900 may be reflected from the eyeball 1110. The light reflected from the eyeball 1110 may travel in a direction away from the optical axis 1100 of the lens 610. The head mounted device 200 may include an auxiliary lens 1510 (e.g., the second lens 550 of FIG. 5) which compensates or corrects the light reflected from the eyeball 1110. The auxiliary lens 1510 may allow the light reflected from the eyeball 1110 to be corrected or compensated and to be transferred to a second camera 1500. Since the auxiliary lens 1510 corrects or compensates the light reflected from the eyeball 1110, the second camera 1500 may obtain an image with an improved resolution, based on the corrected or compensated light. For example, the second camera 1500 may correspond to the second camera 560 of FIG. 5.

According to an embodiment of the disclosure, regarding light reflected from the eyeball 1110, due to a curvature aberration caused by a physical characteristic (e.g., a curved shape) of the lens 610, at least part of the light reflected from the eyeball 1110 may not be focused on a light receiving region of the second camera 1500. The auxiliary lens 1510 may correct the light so that at least part of the light reflected from the eyeball 1110 is focused on the light receiving region of the second camera 1500. For example, the auxiliary lens 1510 may correct at least part of the light reflected from the eyeball 1110 from passing through the lens 610 and being incident onto the light receiving unit of the second camera 1500 at a distorted angle. Since the light is incident onto the light receiving unit of the second camera 1500 at a corrected angle, the second camera 1500 may obtain an image with an improved resolution.

According to an embodiment of the disclosure, the second camera 1500 may obtain the image of the eyeball 1110, based on the light collected by the auxiliary lens 1510. The processor 120 may obtain whether the eyeball 1110 is a specified user's eyeball, based on the obtained image of the eyeball 1110. For example, the second camera 1500 may include a camera capable of recognizing an iris. The light emitted from the light emitting unit 900 may be focused on the iris of the eyeball 1110. The second camera 1500 may obtain an image of the iris, based on light reflected from the iris. The processor 120 may identify whether the iris corresponds to a specified user's iris, based on the obtained image of the iris.

According to an embodiment of the disclosure, the second camera 1500 may obtain an image for a user's face, based on light reflected from the user's face. The processor 120 may identify information on a face movement, based on the obtained image for the user's face. For example, the information on the face movement may include information on at least one of a change in facial expression, a movement of a pupil, and a movement of a face itself. The processor 120 may identify at least one of a user's expression, a user's gaze, and a user's movement, based on the information on the face movement.

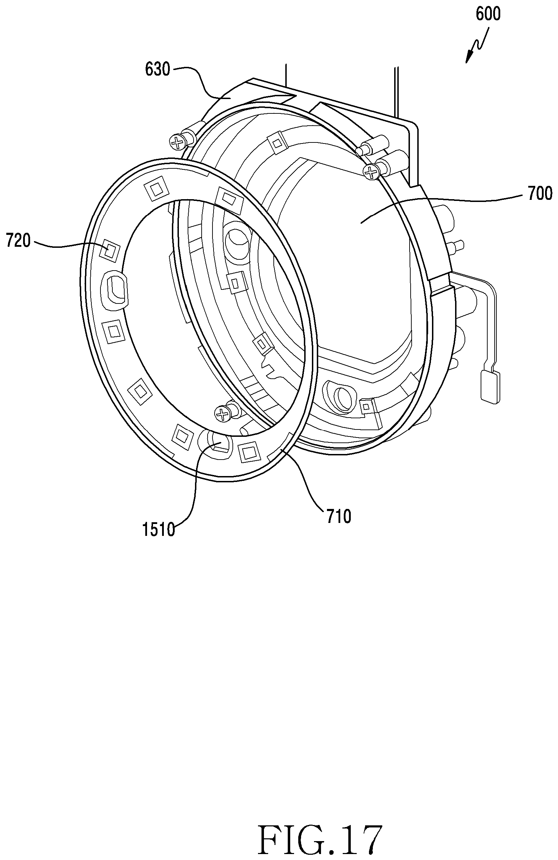

FIG. 17 is an exploded perspective view illustrating an example in which an auxiliary lens, a cover, and a refractive element are formed integrally according to an embodiment.

According to an embodiment of the disclosure, the cover 710 may include the refractive element 720 and the auxiliary lens 1510. Referring to FIG. 17, the at least one auxiliary lens 1510 may correct distortion of light reflected from the eyeball 1110 and passing through the lens 610. For example, the auxiliary lens 1510 may correct the light passing through the lens 610 from being incident on a light receiving unit of the second camera 1500 at a distorted angle. The auxiliary lens 1510 may be disposed to a location corresponding to a location of the second camera 1500 (e.g., the second camera 560 of FIG. 2). Since the lens 1510 is disposed to the location corresponding to the location of the second camera 1500, light collected by the auxiliary lens 1510 may be transferred to the second camera 1500 by minimizing and/or reducing a decrease in an amount of light.

According to an embodiment of the disclosure, the cover 710 may include a material capable of blocking light. For example, the cover 710 may be coated with the material capable of blocking the light. The refractive element 720 and the auxiliary lens 1510 may include a material capable of passing light of a specified wavelength band, emitted from the light emitting unit 900. For example, the light of the specified wavelength band may include light of an infrared wavelength band. For example, the refractive element 720 and the auxiliary lens 1510 may include a black material passing only the light of the infrared wavelength band and absorbing light of a visible light wavelength band.

According to an embodiment of the disclosure, the refractive element 720 may include, for example, a prism shape. The refractive element 720 may refer to a first region formed in the prism shape among regions of the cover 710. The refractive element 720 may include, for example, a mirror shape. The refractive element 720 may refer to a first region formed in the mirror shape among the regions of the cover 710. For example, light emitted from the light emitting unit 900 may be reflected by the refractive element 720 of the mirror shape toward an optical axis. Among the regions of the cover 710, the auxiliary lens 1510 may refer to a second region formed in a shape capable of collecting light reflected from the eyeball 1110.

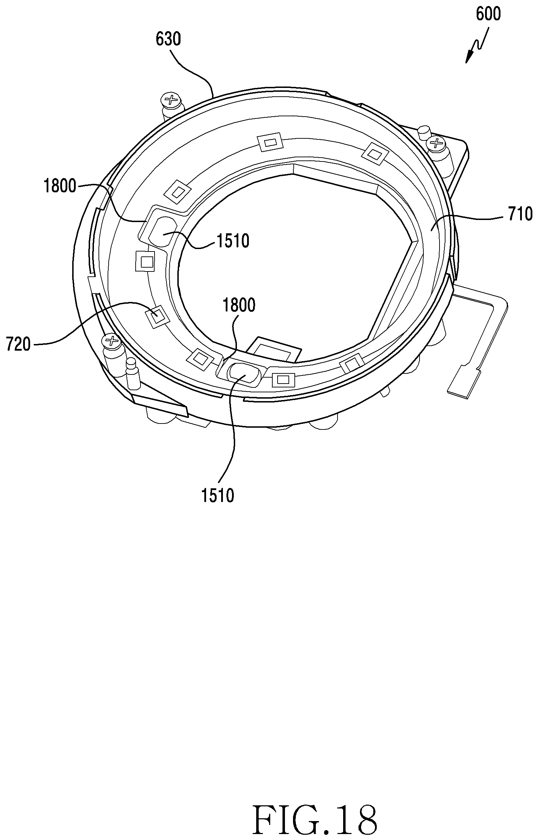

FIG. 18 is a perspective view illustrating an example in which an auxiliary lens and a cover are formed separately according to an embodiment.

According to an embodiment of the disclosure, the auxiliary lens 1510, as a separate member, may be disposed inside the housing 630. For example, the auxiliary lens 1510 may be disposed to at least part of an edge of the display accommodating portion 910. The cover 710 may include at least one opening 1800 at a location corresponding to a location of the auxiliary lens 1510. For example, the at least one opening 1800 may be formed to correspond to a shape of the auxiliary lens 1510. For example, the at least one opening 1800 may be disposed between the plurality of refractive elements 720 disposed on the cover 710. In a state where the cover 710 is disposed inside the housing 630, the auxiliary lens 1510 may correct light through the at least one opening 1800.

According to an embodiment of the disclosure, the auxiliary lens 1510 formed as a separate member may include a material capable of passing light of a specified wavelength band. For example, the material may include a black material capable of absorbing light of a visible light band.

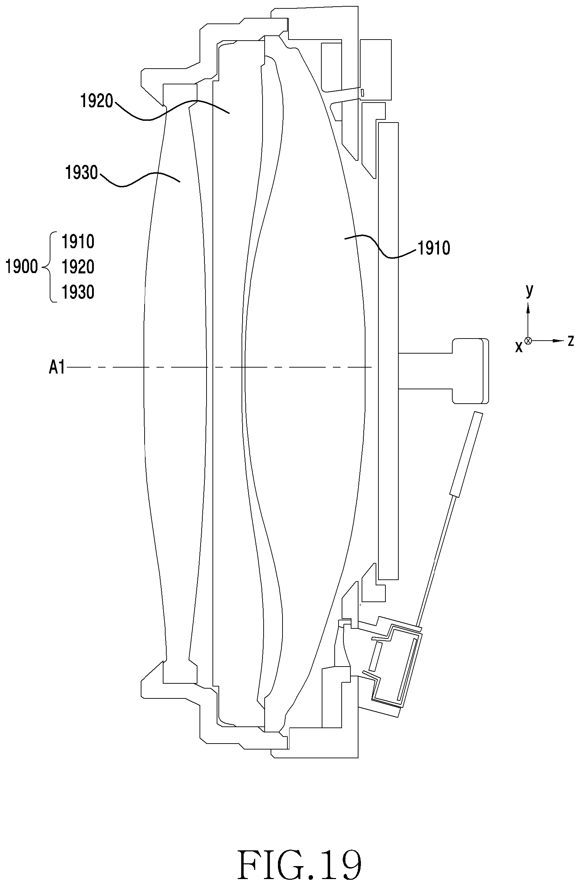

FIG. 19 is a cross-sectional view illustrating an example of a lens according to an embodiment.

According to an embodiment, the first lens 520 of FIG. 5 and the lens 610 of FIG. 6 may be constructed of a lens unit 1900 of FIG. 19.

According to an embodiment, the lens unit 1900 may include a pancake lens. The lens unit 1900 may include, for example, first, second, and third lenses 1910, 1920, and 1930 aligned with respect to an optical axis A1. Optical axes of the first, second, and third lenses 1910, 1920, and 1930 may coincide with the optical axis A1. The first, second, and third lenses 1910, 1920, and 1930 may overlap in a direction parallel to the optical axis A1. The first lens 1910 may face a display (e.g., the display 700 of FIG. 7). In a state of wearing the head mounted electronic device 200, the third lens 1930 may face a user's eyeball (e.g., the eyeball 1110 of FIG. 11). The second lens 1920 may be disposed between the first lens 1910 and the third lens 1930.

According to an embodiment, the first, second and third lenses 1910, 1920, and 1930 of the lens unit 1900 may have a symmetrical shape with respect to the optical axis A1. The first, second, and third lenses 1910, 1920, and 1930 may be, for example, circular or part of circular in shape when viewed in a direction parallel to the optical axis A1.

According to an embodiment, the first, second and third lenses 1910, 1920, and 1930 of the lens unit 1900 may have different optical characteristics. At least any two of the first, second, and third lenses 1910, 1920, and 1930 of the lens unit 1900 may have different physical characteristics (e.g., shapes).

According to an embodiment, one face of the first lens 1910, facing the second lens 1920, and the other face of the second lenes 1920, facing the first lens 1910, may not be parallel at least in part. One face of the second lens 1920, facing the third lens 1930, and the other face of the third lens 1930, facing the second lens 1920, may not be parallel at least in part.

According to an embodiment, the lens unit 1900 may include a first air gap between the first lens 1910 and the second lens 1920. The lens unit 1900 may include a second air gap between the second lens 1920 and the third lens 1930. The lens unit 1900 may have a specific optical characteristic such as transmission, reflection, and/or refraction, by combination of the first lens 1910, the second lens 1920, the third lens 1930, the first air gap, and the second air gap.

According to an embodiment, the lens unit 1900 may be configured to focus first light output from the display 700 onto a pupil of the user's eyeball 1110.

According to an embodiment, although not shown separately, the lens unit 1900 may be provided (or formed) as a bonded lens. The lens unit 1900 may be provided (or formed) in such a form that the first and second lenses 1910 and 1920 and the second and third lenses 1920 and 1930 are bonded without an air gap. One face of the first lens 1910, facing the second lens 1920, and the other face of the second lens 1920, facing the first lens 1920, may be substantially parallel, and may be bonded with the air gap. One face of the second lens 1920, facing the third lens 1930, and the other face of the third lens 1930, facing the second lens 1920, may be substantially parallel, and may be bonded without the air gap.

According to various embodiments, although not shown separately, the lens unit 1900 may be provided (or shaped) by combination of a pancake lens and a bonded lens. For example, one face of the first lens 1910, facing the second lens 1920, and the other face of the second lens 1920, facing the first lens 1910, may be substantially parallel and may be bonded without the air gap, and one face of the second lens 1920, facing the third lens 1930, and the other face of the third lens 1930, facing the second lens 1920, may be not parallel at least in part and may form the air gap. For example, one face of the second lens 1920, facing the third lens 1930, and the other face of the third lens 1930, facing the second lens 1930, may be substantially parallel and bonded without the air gap, and one face of the first lens 1910, facing the second lens 1920, and the other face of the second lens 1920, facing the first lens 1910, may be not parallel at least in part and may be formed the air gap.

According to various embodiments, the number of lenses included in the lens unit 1900 is not limited to the illustrated example.

Embodiments of the disclosure may provide an electronic device in which an amount of light emitted from a light emitting unit and reaching a user's eyeball is increased to sufficiently ensure the amount of light.

Embodiments of the disclosure may provide an electronic device in which an amount of light reflected from a user's eyeball and reaching a camera is increased to obtain an image with a high resolution.

Advantages acquired in the disclosure are not limited to the aforementioned advantages, and other advantages not mentioned herein may be clearly understood by those skilled in the art to which the disclosure pertains from the following descriptions.

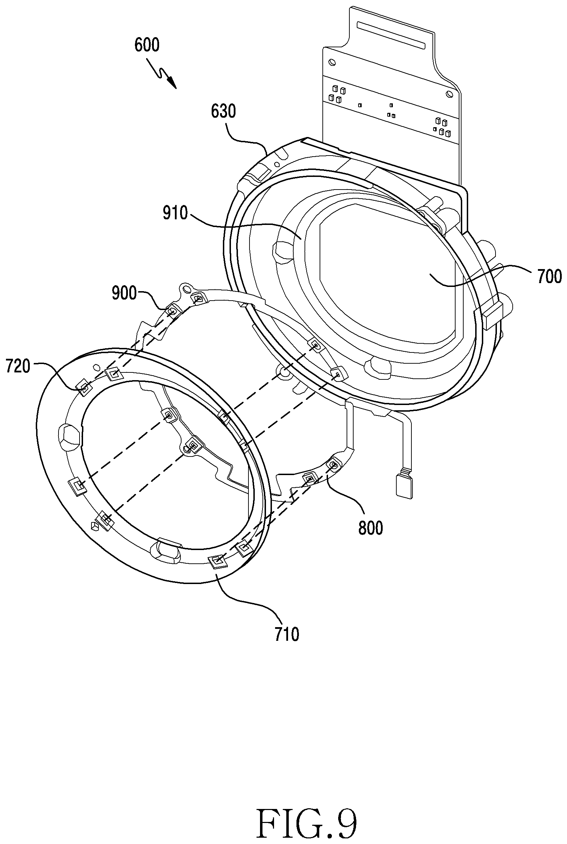

According to an embodiment of the disclosure, a head mounted device (e.g., the electronic device 101 of FIG. 1, the head mounted device 200 of FIG. 3) may include a housing (e.g., the housing 360 of FIG. 3, the housing 630 of FIG. 6). The head mounted device (e.g., the electronic device 101 of FIG. 1, the head mounted device 200 of FIG. 3) may include a display (e.g., the display module 160 of FIG. 1, the display 700 of FIG. 7) disposed inside the housing (e.g., the housing 360 of FIG. 3, the housing 630 of FIG. 6). The head mounted device (e.g., the electronic device 101 of FIG. 1, the head mounted device 200 of FIG. 2) may include at least one lens (e.g., the lens 380 of FIG. 3, the lens 520 of FIG. 5, the lens 610 of FIG. 6) including a front side and a rear side opposite the front side. Wherein the at least one lens (e.g., the lens 380 of FIG. 3, the lens 520 of FIG. 5, the lens 610 of FIG. 6) may be configured so that a user wearing the head mounted device (e.g., the electronic device 101 of FIG. 1, the head mounted device 200 of FIG. 2) is able to see the display (e.g., the display module 160 of FIG. 1, the display 700 of FIG. 7) through the at least one lens (e.g., the lens 380 of FIG. 3, the lens 520 of FIG. 5, the lens 610 of FIG. 6). The head mounted device (e.g., the electronic device 101 of FIG. 1, the head mounted device 200 of FIG. 2) may include a light emitting unit comprising light emitting circuitry (e.g., the light emitting unit 500 of FIG. 5, the light emitting unit 900 of FIG. 9) disposed to the front side of the at least one lens (e.g., the lens 380 of FIG. 3, the lens 520 of FIG. 5, the lens 610 of FIG. 6) and configured to emit light in a first direction (e.g., the first direction 400 of FIG. 3). The head mounted device (e.g., the electronic device 101 of FIG. 1, the head mounted device 200 of FIG. 2) may include a camera (e.g., the second camera 560 of FIG. 5, the second camera 1500 of FIG. 15) disposed to the front side of the at least one lens (e.g., the lens 380 of FIG. 3, the lens 520 of FIG. 5, the lens 610 of FIG. 6) and configured to obtain an image of at least part of an eyeball of the user. The head mounted device (e.g., the electronic device 101 of FIG. 1, the head mounted device 200 of FIG. 2) may include a refractive element comprising a refractive material (e.g., the refractive element 510 of FIG. 5, the refractive element 720 of FIG. 7) disposed between the at least one lens (e.g., the lens 380 of FIG. 3, the lens 520 of FIG. 5, the lens 610 of FIG. 6) and the light emitting unit (e.g., the light emitting unit 500 of FIG. 5, the light emitting unit 900 of FIG. 9). The light emitted from the light emitting unit (e.g., the light emitting unit 500 of FIG. 5, the light emitting unit 900 of FIG. 9) may be refracted by the refractive element (e.g., the refractive element 510 of FIG. 5, the refractive element 720 of FIG. 7, the prism shape 1400 of FIG. 14) in a second direction facing the eyeball of the user.

According to an embodiment of the disclosure, the first direction (e.g., the first direction 400 of FIG. 3) may be a direction corresponding to a direction parallel to an optical axis (e.g., the optical axis 540 of FIG. 5, the optical axis 1100 of FIG. 11) of the at least one lens (e.g., the lens 380 of FIG. 3, the lens 520 of FIG. 5, the lens 610 of FIG. 6). The second direction may be a direction corresponding to a direction inclined toward the optical axis (e.g., the optical axis 540 of FIG. 5, the optical axis 1100 of FIG. 11).

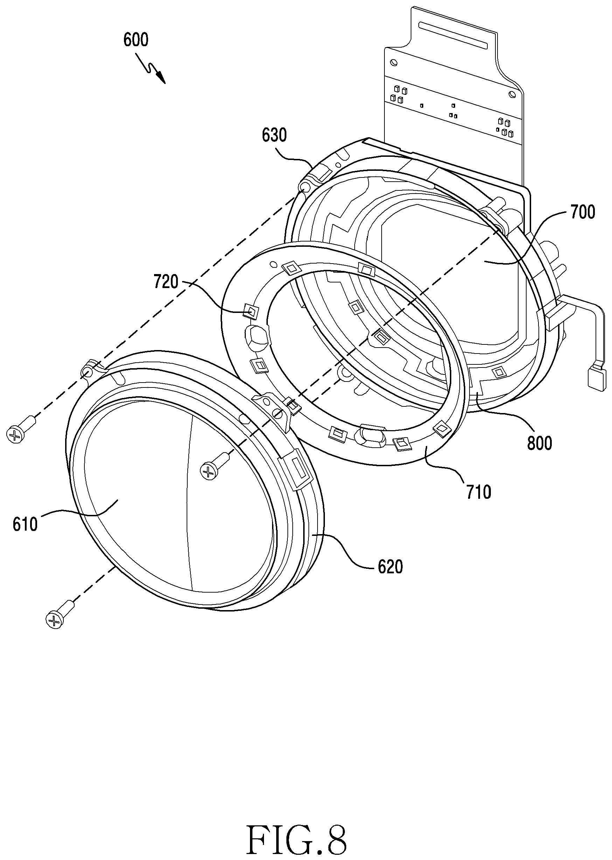

According to an embodiment of the disclosure, the head mounted device (e.g., the electronic device 101 of FIG. 1, the head mounted device 200 of FIG. 2) may further include: a printed circuit board (e.g., the printed circuit board 800 of FIG. 8) accommodated in the housing (e.g., the housing 360 of FIG. 3, the housing 630 of FIG. 6) and disposed between the display (e.g., the display module 160 of FIG. 1, the display 700 of FIG. 7) and the at least one lens (e.g., the lens 380 of FIG. 3, the lens 520 of FIG. 5, the lens 610 of FIG. 6), and a cover (e.g., the cover 710 of FIG. 7) disposed to cover the printed circuit board (e.g., the printed circuit board 800 of FIG. 8). The light emitting unit (e.g., the light emitting unit 500 of FIG. 5, the light emitting unit 900 of FIG. 9) may be disposed on at least part of the printed circuit board (e.g., the printed circuit board 800 of FIG. 8). The refractive element (e.g., the refractive element 510 of FIG. 5, the refractive element 720 of FIG. 7, the prism shape 1400 of FIG. 14) may be formed at a location corresponding to a location of the light emitting unit (e.g., the light emitting unit 500 of FIG. 5, the light emitting unit 900 of FIG. 9) on the cover (e.g., the cover 710 of FIG. 7).

According to an embodiment of the disclosure, the cover (e.g., the cover 710 of FIG. 7) and the refractive element (e.g., the refractive element 510 of FIG. 5, the refractive element 720 of FIG. 7, the prism shape 1400 of FIG. 14) may be formed integrally.

According to an embodiment of the disclosure, the cover (e.g., the cover 710 of FIG. 7) may include a material capable of passing light of a specified wavelength band.

According to an embodiment of the disclosure, the specified wavelength band may include light of an infrared wavelength band.

According to an embodiment of the disclosure, the cover (e.g., the cover 710 of FIG. 7) may include a black material which blocks light of a visible light band.

According to an embodiment of the disclosure, the cover (e.g., the cover 710 of FIG. 7) may have a surface which scatters light to at least part of a remaining region excluding a region in which the refractive element (e.g., the refractive element 510 of FIG. 5, the refractive element 720 of FIG. 7, the prism shape 1400 of FIG. 14) is formed.

According to an embodiment of the disclosure, the refractive element (e.g., the refractive element 510 of FIG. 5, the refractive element 720 of FIG. 7, the prism shape 1400 of FIG. 14) may include a prism shape.

According to an embodiment of the disclosure, the head mounted device (e.g., the electronic device 101 of FIG. 1, the head mounted device 200 of FIG. 2) may further include: an auxiliary lens (e.g., the second lens 550 of FIG. 5, the auxiliary lens 1510 of FIG. 15) disposed to one side of the camera (e.g., the second camera 560 of FIG. 5, the second camera 1500 of FIG. 15). The auxiliary lens (e.g., the second lens 550 of FIG. 5, the auxiliary lens 1510 of FIG. 15) may correct the second light passing through the at least one lens (e.g., the lens 380 of FIG. 3, the lens 520 of FIG. 5, the lens 610 of FIG. 6) from the outside of the head mounted device (e.g., the electronic device 101 of FIG. 1, the head mounted device 200 of FIG. 2) so that the light is received in the camera (e.g., the second camera 560 of FIG. 5, the second camera 1500 of FIG. 15).

According to an embodiment of the disclosure, the auxiliary lens (e.g., the second lens 550 of FIG. 5, the auxiliary lens 1510 of FIG. 15) may be formed integrally with the cover (e.g., the cover 710 of FIG. 7).

According to an embodiment of the disclosure, the housing (e.g., the housing 360 of FIG. 3, the housing 630 of FIG. 6) may include an accommodating portion (e.g., the display accommodating portion 910 of FIG. 9) in which the display (e.g., the display module 160 of FIG. 1, the display 700 of FIG. 7) is accommodated. The printed circuit board (e.g., the printed circuit board 800 of FIG. 8) may be disposed along an edge of the accommodating portion (e.g., the display accommodating portion 910 of FIG. 9).

According to an embodiment of the disclosure, the second light may include light reflected from an eyeball (e.g., the object 530 of FIG. 5, the eyeball 1110 of FIG. 11) of the user wearing the head mounted device (e.g., the electronic device 101 of FIG. 1, the head mounted device 200 of FIG. 2). The head mounted device may further include at least one processor (e.g., the processor 120 of FIG. 1) comprising processing circuitry , and a memory (e.g., the memory 130 of FIG. 1) storing instructions, the instructions, when executed individually and/or collectively by the at least one processor, causing the head mounted device (e.g., the electronic device 101 of FIG. 1, the head mounted device 200 of FIG. 2) to identify a location of an iris of the eyeball (e.g., the object 530 of FIG. 5, the eyeball 1110 of FIG. 11), based on information obtained through the camera (e.g., the second camera 560 of FIG. 5, the second camera 1500 of FIG. 15).

According to an embodiment of the disclosure, a display module (e.g., the display module 300 of FIG. 3, the display module 600 of FIG. 6) of a head mounted device (e.g., the electronic device 101 of FIG. 1, the head mounted device 200 of FIG. 2) may include: a display (e.g., the display module 160 of FIG. 1, the display 700 of FIG. 7). The display module (e.g., the display module 300 of FIG. 3, the display module 600 of FIG. 6) may include at least one lens (e.g., the lens 380 of FIG. 3, the lens 520 of FIG. 6, the lens 610 of FIG. 6) including a front side and a rear side opposite the front side. The at least one lens (e.g., the lens 380 of FIG. 3, the lens 520 of FIG. 6, the lens 610 of FIG. 6) may be configured so that a user wearing the head mounted device (e.g., the electronic device 101 of FIG. 1, the head mounted device 200 of FIG. 2) is able to see the display (e.g., the display module 160 of FIG. 1, the display 700 of FIG. 7) through the at least one lens (e.g., the lens 380 of FIG. 3, the lens 520 of FIG. 6, the lens 610 of FIG. 6). The display module (e.g., the display module 300 of FIG. 3, the display module 600 of FIG. 6) may include a light emitting unit comprising light emitting circuitry (e.g., the light emitting unit 500 of FIG. 5, the light emitting unit 900 of FIG. 9) disposed to the front side of the at least one lens (e.g., the lens 380 of FIG. 3, the lens 520 of FIG. 6, the lens 610 of FIG. 6) and emitting light in parallel to an optical axis (e.g., the optical axis 540 of FIG. 5, the optical axis 1100 of FIG. 11) of the at least one lens (e.g., the lens 380 of FIG. 3, the lens 520 of FIG. 6, the lens 610 of FIG. 6). The display module (e.g., the display module 300 of FIG. 3, the display module 600 of FIG. 6) may include a camera (e.g., the second camera 560 of FIG. 5, the second camera 1500 of FIG. 15) disposed to the front side of the at least one lens (e.g., the lens 380 of FIG. 3, the lens 520 of FIG. 6, the lens 610 of FIG. 6) and configured to obtain an image of at least part of an eyeball of the user. The display module (e.g., the display module 300 of FIG. 3, the display module 600 of FIG. 6) may include a refractive element comprising a refractive material (e.g., the refractive element 510 of FIG. 5, the refractive element 720 of FIG. 7, and the prism shape 1400 of FIG. 14) disposed between the at least one lens (e.g., the lens 380 of FIG. 3, the lens 520 of FIG. 6, the lens 610 of FIG. 6) and the light emitting unit (e.g., the light emitting unit 500 of FIG. 5, the light emitting unit 900 of FIG. 9). The light emitted from the light emitting unit (e.g., the light emitting unit 500 of FIG. 5, the light emitting unit 900 of FIG. 9) may be refracted by a refractive element (e.g., the refractive element 510 of FIG. 5, the refractive element 720 of FIG. 7, and the prism shape 1400 of FIG. 14) to face the optical axis (e.g., the optical axis 540 of FIG. 5, the optical axis 1100 of FIG. 11).

According to an embodiment of the disclosure, the display module (e.g., the display module 300 of FIG. 3, the display module 600 of FIG. 6) of the head mounted device (e.g., the electronic device 101 of FIG. 1, the head mounted device 200 of FIG. 2) may further include: a printed circuit board (e.g., the printed circuit board 800 of FIG. 8) accommodated in the housing (e.g., the housing 360 of FIG. 3, the housing 630 of FIG. 6) and disposed between the display (e.g., the display module 160 of FIG. 1, the display 700 of FIG. 7) and the at least one lens (e.g., the lens 380 of FIG. 3, the lens 520 of FIG. 6, the lens 610 of FIG. 6), and a cover (e.g., the cover 710 of FIG. 7) disposed to cover the printed circuit board (e.g., the printed circuit board 800 of FIG. 8). The light emitting unit (e.g., the light emitting unit 500 of FIG. 5, the light emitting unit 900 of FIG. 9) may be disposed on at least part of the printed circuit board (e.g., the printed circuit board 800 of FIG. 8). The refractive element may be formed at a location corresponding to a location of the light emitting unit (e.g., the light emitting unit 500 of FIG. 5, the light emitting unit 900 of FIG. 9) on the cover (e.g., the cover 710 of FIG. 7).

According to an embodiment of the disclosure, the cover (e.g., the cover 710 of FIG. 7) and the refractive element (e.g., the refractive element 510 of FIG. 5, the refractive element 720 of FIG. 7, and the prism shape 1400 of FIG. 14) may be formed integrally.

According to an embodiment of the disclosure, the cover (e.g., the cover 710 of FIG. 7) may include a material capable of passing light of a specified wavelength band.

According to an embodiment of the disclosure, the specified wavelength band may include an infrared wavelength band.

According to an embodiment of the disclosure, the cover (e.g., the cover 710 of FIG. 7) may include a black material which blocks light of a visible light band.

According to an embodiment of the disclosure, the refractive element (e.g., the refractive element 510 of FIG. 5, the refractive element 720 of FIG. 7, and the prism shape 1400 of FIG. 14) may include a prism shape.

According to an embodiment of the disclosure, there may be provided an electronic device including a refractive element which refracts light emitted from a light emitting unit to face an object.

According to an embodiment of the disclosure, there may be provided an electronic device including a cover formed to cover a printed circuit board, a light emitting unit disposed on the cover, and a cover integrally formed with a compensation lens correcting distortion of light reflected from an object.

In addition thereto, various effects which are directly or indirectly understood through the disclosure may be provided. Advantages acquired in the disclosure are not limited to the aforementioned advantages, and other advantages not mentioned herein may be clearly understood by those skilled in the art to which the disclosure pertains from the foregoing descriptions.

In the aforementioned various embodiments of the disclosure, a component included in the disclosure is expressed in a singular or plural form according to the various embodiments herein. However, the singular or plural expression is selected properly for a situation described for the convenience of explanation, and thus the various embodiments of the disclosure are not limited to a single or a plurality of components. Therefore, a component expressed in a plural form may also be expressed in a singular form, or vice versa.

In addition, in the disclosure, the term "unit", "module", or the like may be a hardware component such as a processor or a circuit, and/or a software component executed by the hardware component such as the processor.

Specific implementations described in the disclosure are only one embodiment, and do not limit the scope of the disclosure in any way. For brevityof the specification, descriptions on the conventional electronic components, control systems, software, and other functional aspects of the systems may be omitted.

In addition, in the disclosure, "including at least one of a, b, or c" may refer to "including only a", "including only b", "including only c", "including a and b", "including b and c", " including a and c", or "including a, b, and c".

While the disclosure has been illustrated and described with reference to certain preferred embodiments thereof, it will be understood by those skilled in the art that various changes in form and details may be made therein without departing from the spirit and scope of the disclosure as defined by the appended claims. Therefore, the scope of the disclosure is defined not by the detailed description thereof but by the appended claims, and all differences within equivalents of the scope will be construed as being included in the disclosure. It will also be understood that any of the embodiment(s) described herein may be used in conjunction with any other embodiment(s) described herein.

## Claims

1. A head mounted device comprising:
a housing;
a display disposed inside the housing;
at least one lens including a front side and a rear side opposite the front side, the at least one lens being configured so that a user wearing the head mounted device is able to see the display through the at least one lens;
a light emitting unit comprising light emitting circuitry disposed to the front side of the at least one lens and configured to emit light in a first direction;
a camera disposed to the front side of the at least one lens and configured to obtain an image of at least part of an eyeball of the user; and
a refractive element comprising a refractive material disposed between the at least one lens and the light emitting unit,
wherein the light emitted from the light emitting unit is refracted by the refractive element in a second direction facing the eyeball of the user.

2. The head mounted device of claim 1,
wherein the first direction is a direction corresponding to a direction parallel to an optical axis of the at least one lens; and
wherein the second direction is a direction corresponding to a direction inclined toward the optical axis.

3. The head mounted device of claim 1, further comprising:
a printed circuit board accommodated in the housing and disposed between the display and the at least one lens; and
a cover disposed to cover the printed circuit board,
wherein the light emitting unit is disposed on at least part of the printed circuit board, and
wherein the refractive element is formed at a location corresponding to a location of the light emitting unit on the cover.

4. The head mounted device of claim 3, wherein the cover and the refractive element are formed integrally.

5. The head mounted device of claim 4, wherein the cover includes a material capable of passing light of a specified wavelength band.

6. The head mounted device of claim 5, wherein the specified wavelength band includes light of an infrared wavelength band.

7. The head mounted device of claim 6, wherein the cover includes a black material which blocks light of a visible light band.

8. The head mounted device of claim 5, wherein the cover includes a surface which scatters light to at least part of a region excluding a region in which the refractive element is formed.

9. The head mounted device of claim 4, wherein the refractive element includes a prism shape.

10. The head mounted device of claim 3, further comprising
an auxiliary lens disposed to one side of the camera,
wherein the auxiliary lens corrects the second light passing through the at least one lens from the outside of the head mounted device so that the second light is received in the camera.

11. The head mounted device of claim 10, wherein the auxiliary lens is formed integrally with the cover.

12. The head mounted device of claim 3,
wherein the housing includes an accommodating portion in which the display is accommodated, and
wherein the printed circuit board is disposed along an edge of the accommodating portion.

13. The head mounted device of claim 1,
wherein the second light includes light reflected from the eyeball of the user wearing the head mounted device, and
wherein the head mounted device further comprises:
at least one processor comprising processing circuitry; and
a memory storing instructions,
the instructions, when executed individually or collectively by the at least one processor, causing the head mounted device to identify a location of an iris of the eyeball, based on information obtained through the camera.

14. A display module of a head mounted device, comprising:
a display;
at least one lens including a front side and a rear side opposite the front side, the at least one lens being configured so that a user wearing the head mounted device is able to see the display through the at least one lens;
a light emitting unit comprising light emitting circuitry disposed to the front side of the at least one lens and emitting light in parallel to an optical axis of the at least one lens;
a camera disposed to the front side of the at least one lens and configured to obtain an image of at least part of an eyeball of the user; and
a refractive element comprising a refractive material disposed between the at least one lens and the light emitting unit,
wherein the light emitted from the light emitting unit is refracted by the refractive element to face the optical axis.

15. The display module of the head mounted device of claim 14, further comprising:
a printed circuit board disposed between the display and the at least one lens; and
a cover disposed to cover the printed circuit board,
wherein the light emitting unit is disposed on at least part of the printed circuit board, and
wherein the refractive element is formed at a location corresponding to a location of the light emitting unit on the cover.
